# EUROPEAN PATENT APPLICATION

(11) **EP 1 956 461 A2**
(43) Date of publication of application: **13.08.2008**
(21) Application number: 08150651.1
(22) Date of filing: 25.01.2008
(51) Int. Cl.: G05D 23/19

(54) **Local controller, remote management controller and method for automatically updating the local controller of an air conditioner system**

(30) Priority: 08.02.2007 KR 20070013379
(71) Applicant: LG Electronics Inc., Seoul 150-721 (KR)
(72) Inventor: Park, Jin-Seok, Seoul (KR); Youn, Sang-Chul, Seoul (KR); Jeon, Duck-Gu, Seoul (KR)
(74) Representative: Vossius & Partner

(57) **Abstract**

A remote management system and method having an automatic update function, the system including: a remote management controller located remotely from at least one air conditioner system so as to perform a central control for the air conditioner system(s); and a local controller installed between the air conditioner system(s) and the remote management controller so as to update management programs of the air conditioner system(s) after downloading necessary information by periodically connecting with the remote management controller through a network, whereby accordingly, the local controller can be efficiently updated by using the remote management system, thereby enhancing the system administrator's convenience.

## Description

The present invention relates to a local controller, a remote management controller and a method for automatically updating the local controller of an air conditioner system, and more particularly, to a local controller, a remote management controller and a method for automatically updating the local controller of an air conditioner system which is capable of enhancing a system administrator's convenience by efficiently updating a local controller by using a remote management system.

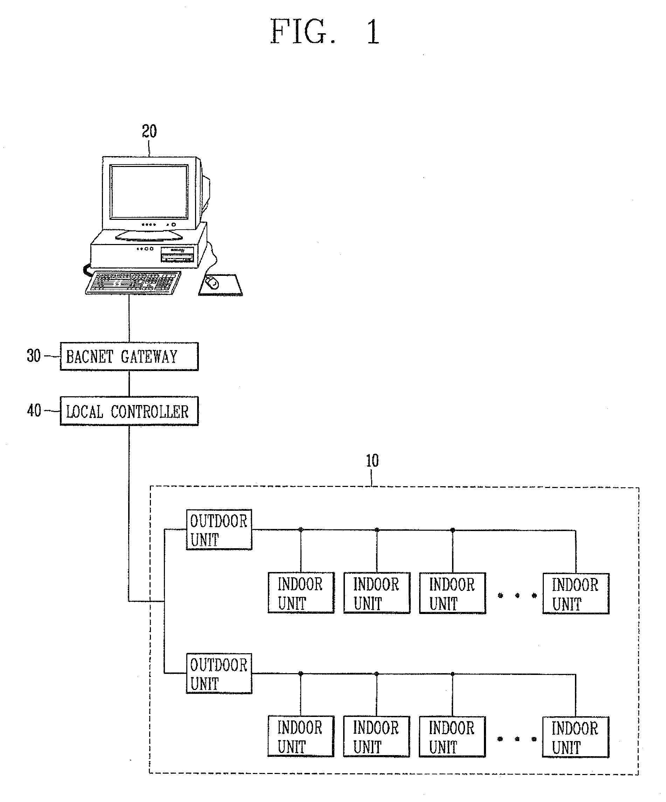

Figure 1 schematically illustrates the structure of a related art building management system.

As shown in the drawing, the related art building management system includes a plurality of so-called "multi-type" air conditioners (an air conditioner having a plurality of indoor units connected to one outdoor unit) 10 installed in a building, a building management controller 20 for controlling the air conditioners 10, a BACnet gateway 30 connecting the air conditioners 10 and the building management controller 20 based on a BACnet protocol (a standardized data communication protocol for building automation and control networks), and a local controller 40 interfacing with the BACnet gateway 30 to regularly check the air conditioners.

The related art building management system has the following problem. That is, in order to update programs of the local controller 40, the local controller 40 has to be separated i.e., isolated or disconnected from the building management controller 20 and perform the program update by using a development computer, and then be reinstalled, and accordingly, it is required to visit every site where the building management controllers 20 are installed whenever updating the programs of the local controller 40 is necessary and to perform almost all processes manually, thereby undesirably requiring much time and effort.

Therefore, the present invention is directed to provide a local controller, a remote management controller and a method for automatically updating the local controller of an air conditioner system which is capable of enhancing a system administrator's convenience by efficiently updating the local controller by using the remote management controller.

To achieve these and other advantages and in accordance with the purpose of the present invention, as embodied and broadly described herein, there is provided a local controller, a remote management controller and a method for automatically updating the local controller of an air conditioner system, and a remote management system comprising: a remote management controller located remotely from at least one air conditioner system so as to perform a central control for the air conditioner system; and a local controller installed between the air conditioner system and the remote management controller so as to update management programs of the air conditioner system after downloading necessary information by periodically connecting to the remote management controller through a network.

Preferably, the local controller and the remote management controller may be connected to each other by a communication method defined as an interactive protocol.

The foregoing and other objects, features, aspects and advantages of the present invention will become more apparent from the following detailed description of the present invention when taken in conjunction with the accompanying drawings.
Figure 1 schematically illustrates a structure of a related art building management system,
Figure 2 schematically illustrates a structure of a remote management system having an automatic update function in accordance with one embodiment of the present invention; and
Figure 3 schematically illustrates a driving method for a remote management system having an automatic update function in accordance with another embodiment of the present invention.

### DETAILED DESCRIPTION OF THE INVENTION

Description will now be given in detail of the preferred embodiments of the present invention, examples of which are illustrated in the accompanying drawings.

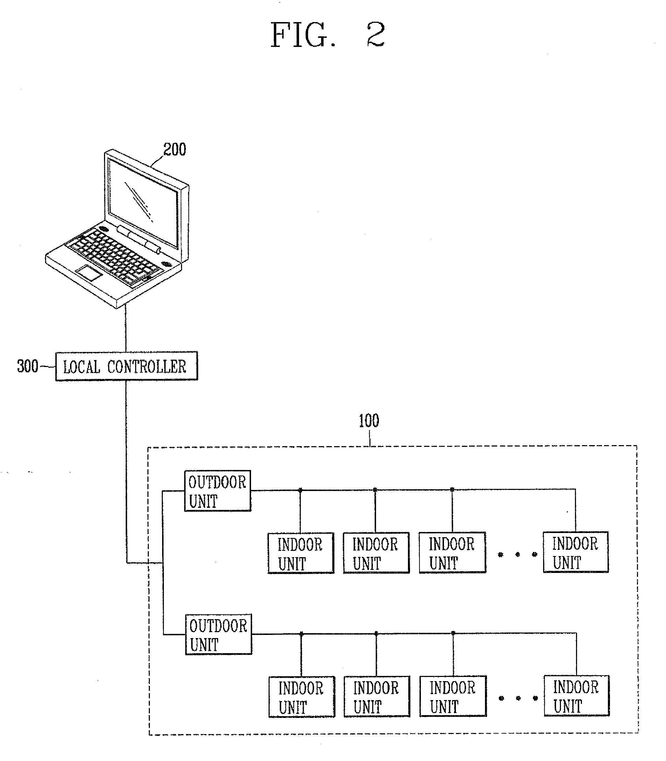

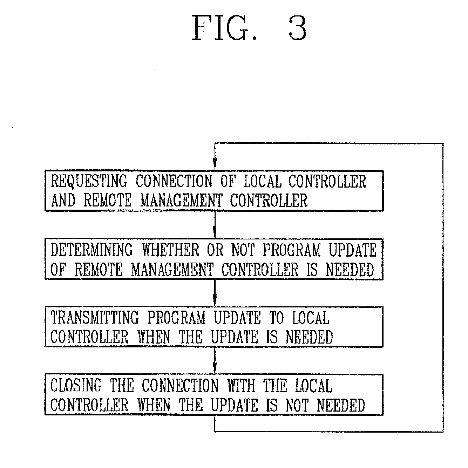

Figure 2 schematically illustrates the structure of a remote management system having an automatic update function in accordance with one embodiment of the present invention, and Figure 3 schematically illustrates a driving method for a remote management system having an automatic update function in accordance with another embodiment of the present invention.

As shown in the drawings, a local controller for an air conditioner system which periodically connects to a remote management controller through a network, and downloads an updated management program for the air conditioner system from the remote management controller through the network. Here, the local controller reports a version of a management program for the air conditioner system which is stored in the local controller to the remote management controller through the network. Also, the local controller automatically initiates the updated management program after it is downloaded from the remote management controller.

A remote management controller in accordance with one embodiment of the present invention for an air conditioner system which determines a version of a management program for the air conditioner system which is stored in a local controller, and downloads an updated management program to the local controller through a network based on the version of the management program stored in the local controller. Here, the remote management controller is informed of the version by the local controller.

As shown in the drawings, the remote management system having the automatic update function in accordance with one embodiment of the present invention includes a remote management controller 200 located remotely from a plurality of air conditioners 100 so as to perform a central controlling of the air conditioners, and a local controller 300 installed between the air conditioners 100 and the remote management controller 200 so as to update management programs of the air conditioners after downloading necessary information by periodically connecting to the remote management controller 200 through a network.

The remote management controller 200 may confirm a program version of the local controller 300, and determine whether or not a program update is needed based on the program version information. If a program update is needed, the remote management controller 200 may transmit the updated program to the local controller 300, or if not, the connection may be ended.

The local controller 300 may have its own program version, and periodically connect to the remote management controller 200 through the network so as to report its own program version by using a pre-defined protocol and to request a necessary update procedure.

Communication between the remote management controller 200 and the local controller 100 may be performed by a pre-determined protocol. The protocol is a sequential interactive protocol to confirm the update procedure in a request and response manner, thereby enhancing the reliability of the update procedure.

The update procedure may be performed in an interactive manner according to a protocol order. Whenever a request is not accurately responded to, the update procedure may be regarded as having encountered a fault, thereby being disconnected to perform the updating again.

At first, the local controller 300 may request to the remote management controller 200 to be connected to each other, and the remote management controller 200 may send a connection confirming response. Upon receiving the connection confirming response, the local controller 300 may transmit its current program version.

The remote management controller 200 may determine whether or not the update is needed. And, when the update is needed, the remote management controller 200 may provide information regarding the program update, such as the number of files, sizes, etc., so that the local controller can prepare to download same.

Thereafter, the remote management controller 200 may upload the program corresponding to the program information to the local controller 300. And, upon successfully receiving the uploaded program, the local controller 300 may send a download confirmation response to the remote management controller 200.

Finally, the local controller 300 may send a connection end request to the remote management controller 200. Then, the remote management controller 200 may send response information corresponding to the request, and at the same time, close the connection.

The local controller 300 may store the program update transmitted from the remote management controller 200 in an inner flash memory and initiate the updated program so as to operate a new program. These processes may be automatically performed by an update software routine, and processes for separating the air conditioner systems 100 from the remote management controller 200, and for reinstalling them may not be needed.
A method for automatically updating a local controller of an air conditioner system in accordance with the present invention, comprising: periodically connecting, by the local controller, to a remote management controller through a network; determining a version of a management program for the air conditioner system which is stored in a local controller; and downloading an updated management program from the remote management controller to the local controller through the network based on the version of the management program stored in the local controller. Also, the method in accordance with the present invention further comprising reporting the version by the local controller to the remote management controller through the network. Here, , the method in accordance with the present invention further comprising automatically initiating by the local controller the updated management program after it is downloaded from the remote management controller.

In another aspect of the present invention, there is provided a remote management method having an automatic update function, the method comprising: connecting a local controller to a remote management controller; transmitting, by the local controller, of current program version information to the remote management controller; determining, by the remote management controller, whether or not a program update of the local controller is needed based on the transmitted program version information; and downloading, by the local controller, an updated program from the remote management controller.

Preferably, the method may further comprise: transmitting by the local controller to the remote management controller a request signal for closing the connection, when the program downloading for the local controller is completed; and transmitting, by the remote management controller to the local controller, a response signal for confirming whether or not the connection with the local controller has been closed.

Preferably, the local controller may periodically connect to the remote management controller so as to download the updated programs.

Preferably, the method may further comprise transmitting, by the remote management controller to the local controller, information regarding the updated program so that the local controller can prepare to download same.

In a further aspect of the present invention, there is provided a remote management method having an automatic update function, the method comprising: connecting a terminal to a local controller; receiving, by the terminal, current program version information from the local controller; determining, by the terminal, whether or not a program update of the local controller is needed based on the program version information; and uploading, by the terminal, an updated program to the local controller if determined to be needed.

Preferably, the local controller may mount a web server on a platform, and upload a corresponding program from the terminal when a user having received authentication through the terminal performs a log-in and the program update is needed.

Preferably, the terminal may connect to the local controller through the Internet so as to perform the program update of the local controller remotely.

As aforementioned, in accordance with the present invention, there is provided the remote management controller located remotely from at least one air conditioner system so as to perform a central control for the air conditioner system(s); and the local controller installed between the air conditioner system(s) and the remote management controller so as to update management programs of the air conditioner system(s) after downloading necessary information by periodically connecting with the remote management controller through the network, whereby accordingly, the local controller can be efficiently updated, thereby enhancing the system administrator's convenience.

As the present inventive features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A local controller for an air conditioner system which periodically connects to a remote management controller through a network, and downloads an updated management program for the air conditioner system from the remote management controller through the network.

2. The local controller according to claim 1, wherein the local controller reports a version of a management program for the air conditioner system which is stored in the local controller to the remote management controller through the network.

3. The local controller according to claim 1 or 2, wherein the local controller automatically initiates the updated management program after it is downloaded from the remote management controller.

4. A remote management controller for an air conditioner system which determines a version of a management program for the air conditioner system which is stored in a local controller, and downloads an updated management program to the local controller through a network based on the version of the management program stored in the local controller.

5. The remote management controller according to claim 4, wherein the remote management controller is informed of the version by the local controller.

6. A method for automatically updating a local controller of an air conditioner system, comprising:
periodically connecting, by the local controller, to a remote management controller through a network;
determining a version of a management program for the air conditioner system which is stored in a local controller; and
downloading an updated management program from the remote management controller to the local controller through the network based on the version of the management program stored in the local controller.

7. The method according to claim 6, further comprising reporting the version by the local controller to the remote management controller through the network.

8. The method according to claim 6 or 7, further comprising automatically initiating by the local controller the updated management program after it is downloaded from the remote management controller.
